# EUROPEAN PATENT APPLICATION

(11) **EP 4 679 545 A1**
(43) Date of publication of application: **14.01.2026**
(21) Application number: 24820918.1
(22) Date of filing: 04.07.2024
(51) Int. Cl.: H01M 10/04, H01M 10/0585, B30B 15/06

(54) **HOT-PRESSING DEVICE**

(30) Priority: 06.05.2024 CN 202420957258 U; 06.05.2024 CN 202410548097
(71) Applicant: Wuxi Lead Intelligent Equipment Co., Ltd., Wuxi, Jiangsu 214028 (CN)
(72) Inventor: WEI, Jiajun, Wuxi, Jiangsu 214028 (CN); HUANG, Haitao, Wuxi, Jiangsu 214028 (CN); SUN, Yuwei, Wuxi, Jiangsu 214028 (CN); YANG, Zihao, Wuxi, Jiangsu 214028 (CN)
(74) Representative: Rau, Schneck & Hübner Patentanwälte Rechtsanwälte PartGmbB
(86) International application number: PCT/CN2024/103605
(87) International publication number: WO 2025/231981

(57) **Abstract**

Disclosed is a hot-pressing apparatus, which comprises a hot-pressing drive mechanism, a first hot-pressing mechanism, a second hot-pressing mechanism, a diaphragm clamping mechanism and a jacking mechanism. Before transferring the battery cell, the supporting assembly may be driven first to jack a part of the diaphragm, thus forming the transferring-supporting surface above the second hot-pressing plate. The jaw first places the battery cell on the transferring-supporting surface, the transferring-supporting surface may contact only a part of the battery cell to allow the jaw to be suspended, and once the jaw is released, it can be withdrawn. Next, the jacking mechanism withdraws to flatten the diaphragm, and the battery cell will be borne on the diaphragm steadily. As the hot-pressing drive mechanism drives the first hot-pressing plate and the second hot-pressing plate close to each other, the first hot-pressing plate may press the diaphragm and the battery cell borne on the diaphragm against the second hot-pressing plate. It is clear that in a process of transferring the battery cell to the second hot-pressing plate, the use of the diaphragm for transferring may prevent the battery cell from shaking or tilting, thus placing the battery cell steadily. (FIG. 1)

## Description

### TECHNICAL FIELD

The present disclosure relates to the technical field of battery devices, and particularly to a hot-pressing apparatus.

### BACKGROUND

In the process of preparing a battery cell, after loose stacking of a battery cell, compression thereof is required. A commonly used hot-pressing apparatus for laminating the battery cell has an upper pressing plate and a lower pressing plate that are provided oppositely. After the battery cell is stacked, it is generally transported by a jaw to between the upper pressing plate and the lower pressing plate for hot-pressing. When placing the battery cell on the lower pressing plate, the lower part of the jaw will be positioned between the lower pressing plate and the battery cell. However, due to the thickness of the jaw itself, it may cause the battery cell to tilt. Moreover, since the battery cell is generally of a considerable thickness, the battery cell may shake or even topple over when the jaw is pulled out, resulting in failure to steadily place the battery cell onto the lower pressing plate.

### SUMMARY

According to various embodiments of the present disclosure, a hot-pressing apparatus is provided.

A hot-pressing apparatus comprises a hot-pressing drive mechanism, a first hot-pressing mechanism and a second hot-pressing mechanism, the first hot-pressing mechanism comprises a first hot-pressing plate, the second hot-pressing mechanism comprises a second hot-pressing plate, and the hot-pressing apparatus further comprises:
a diaphragm clamping mechanism capable of providing a diaphragm between the first hot-pressing plate and the second hot-pressing plate; and
a jacking mechanism comprising a driving assembly and a supporting assembly, wherein the supporting assembly is capable of moving to between the diaphragm and the second hot-pressing plate under drive of the driving assembly and jacking the diaphragm toward the first hot-pressing plate, with a part of the diaphragm jacked by the supporting assembly forming a transferring-supporting surface for bearing a battery cell.

The hot-pressing apparatus of the present disclosure, before transferring the battery cell, may first drive the supporting assembly to jack a part of the diaphragm, thus forming the transferring-supporting surface above the second hot-pressing plate. The jaw first places the battery cell on the transferring-supporting surface, the transferring-supporting surface may contact only a part of the battery cell to allow the jaw to be suspended, and once the jaw is released, it can be withdrawn. Next, the jacking mechanism withdraws to flatten the diaphragm, and the battery cell will be borne on the diaphragm steadily. As the hot-pressing drive mechanism drives the first hot-pressing plate and the second hot-pressing plate close to each other, the first hot-pressing plate may press the diaphragm and the battery cell borne on the diaphragm against the second hot-pressing plate. It is clear that in a process of transferring the battery cell to the second hot-pressing plate, the use of the diaphragm for transferring may prevent the battery cell from shaking or tilting, thus placing the battery cell steadily.

In one of embodiments, each of the first hot-pressing plate and the second hot-pressing plate is embedded with a heating rod therein.

In one of embodiments, there are provided a plurality of the first hot-pressing mechanisms and a plurality of the second hot-pressing mechanisms, wherein the plurality of first hot-pressing mechanisms and the plurality of second hot-pressing mechanisms are alternately laminated in a compressing direction, and the first hot-pressing plate of each first hot-pressing mechanism and the second hot-pressing plate of an adjacent second hot-pressing mechanism are provided oppositely to form a laminating space for placing the battery cell.

In one of embodiments, the first hot-pressing mechanism further comprises a blowing assembly, which is capable of blowing air to the battery cell in the laminating space.

In one of embodiments, the diaphragm clamping mechanism is capable of providing a tensioning force for the diaphragm to tension the diaphragm, and in a process of the driving assembly driving the supporting assembly to retract, the diaphragm gradually flattens under the tensioning force of the diaphragm clamping mechanism.

In one of embodiments, the diaphragm clamping mechanism comprises a tensioning element and clamping plates distributed on opposing edges of the second hot-pressing plate, and two ends of the diaphragm are clamped respectively by the clamping plates on two sides and are tensioned by the tensioning element.

In one of embodiments, the diaphragm clamping mechanism further comprises a supporting plate extending from the clamping plate on one side to the clamping plate on the other side, and the clamping plates on the two sides are slidably mounted on the supporting plate.

In one of embodiments, in a process of the hot-pressing drive mechanism driving the first hot-pressing plate and the second hot-pressing plate close to each other, the first hot-pressing mechanism is capable of driving the diaphragm to move until it conforms to a carrying surface of the second hot-pressing plate.

In one of embodiments, the diaphragm clamping mechanism is capable of releasing or tightening the diaphragm which has been clamped, and in a process of the hot-pressing drive mechanism driving the first hot-pressing plate and the second hot-pressing plate close to each other, the first hot-pressing mechanism forces the diaphragm clamping mechanism to release the diaphragm until the diaphragm is driven to move to conform to a bearing surface of the second hot-pressing plate.

In one of embodiments, the diaphragm clamping mechanism is slidably provided along a compressing direction, the first hot-pressing mechanism further comprises a down-pressing element, and in a process of the hot-pressing drive mechanism driving the first hot-pressing plate and the second hot-pressing plate close to each other, the down-pressing element is capable of pressing against the diaphragm clamping mechanism and driving it to move along the compressing direction until it brings the diaphragm to conform to the bearing surface of the second hot-pressing plate.

In one of embodiments, the second hot-pressing mechanism further comprises a guide pillar and an elastic element, the guide pillar extends in the compressing direction, the diaphragm clamping mechanism is sleeved onto the guide pillar, the diaphragm clamping mechanism under support of the elastic element enables the diaphragm to be arranged spaced from the bearing surface of the second hot-pressing plate, and in a process of the hot-pressing drive mechanism driving the first hot-pressing plate and the second hot-pressing plate close to each other, the down-pressing element is capable of overcoming elastic force of the elastic element and driving the diaphragm clamping mechanism to move along the compressing direction.

In one of embodiments, the supporting assembly comprises at least two elongated jacking elements, which are arranged parallel to and spaced apart from each other.

In one of embodiments, the jacking elements are configured as jacking rollers.

In one of embodiments, the jacking elements comprise a first jacking element and a second jacking element, the driving assembly is capable of driving the first jacking element and the second jacking element close to or away from each other so that the first jacking element and the second jacking element are capable of entering into or exiting from between the diaphragm and the second hot-pressing plate, and the driving assembly is further capable of driving the first jacking element and the second jacking element to ascend and descend synchronously along the compression direction so as to lift or flatten the diaphragm.

In one of embodiments, the driving assembly comprises an elevation drive element, an elevation plate, a translation drive element, and an installation plate, the elevation plate is installed on a driving end of the elevation drive element and is capable of ascending and descending along the compressing direction under drive of the elevation drive element, the translation drive element and the installation plate are both installed on the elevation plate, the first jacking element and the second jacking element are slidably installed on the installation plate, and the translation drive element is capable of driving the first jacking element and the second jacking element close to or away from each other along the installation plate.

In one of embodiments, the installation plate is provided with a restraining plate, and the translation drive element is capable of driving the first jacking element and the second jacking element close to each other along the installation plate until they abut against the restraining plate.

In one of embodiments, there are provided two driving assemblies, the two driving assemblies are located on two sides of an extending direction of the first jacking element and the second jacking element, and each driving assembly comprises two translation drive elements which are in transmission connection with the first jacking element and the second jacking element respectively.

In one of embodiments, the first hot-pressing mechanism further comprises a short circuit detection assembly.

In one of embodiments, the first hot-pressing mechanism further comprises a first restraining block, which is capable of moving synchronously with the first hot-pressing plate; the second hot-pressing mechanism further comprises a second restraining block which is provided fixedly relative to the second hot-pressing plate; the first restraining block has a first position and a second position, and when the first restraining block is in the first position, in a process of the first hot-pressing plate moving toward the second hot-pressing plate, the first restraining block is capable of abutting against the second restraining block before the first hot-pressing plate abuts against the second hot-pressing plate; when the first restraining block is in the second position, it is capable of giving way to the second restraining block.

In one of embodiments, comprising a rack is further included, which is provided with a guiding rod extending along a compressing direction and a guiding sleeve slidably sleeved onto the guiding rod, the second hot-pressing mechanism is fixedly installed on the rack, and the first hot-pressing mechanism is provided on the guiding sleeve and is in transmission connection with the hot-pressing drive mechanism.

Details of one or more embodiments of the present disclosure are set forth in the following description and drawings. Other features, objects, and advantages of the present disclosure will become apparent from the specification, drawings, and claims.

### BRIEF DESCRIPTION OF THE DRAWINGS

In order to clearly illustrate embodiments of the present disclosure or technical solutions in the prior art, accompanying drawings that need to be used in description of the embodiments or the prior art will be briefly introduced as follows. Obviously, drawings in following description are only the embodiments of the present disclosure. For those skilled in the art, other drawings can also be obtained according to the disclosed drawings without creative efforts.
FIG. 1 is a front view of a hot-pressing apparatus in a preferred embodiment of the present disclosure;
FIG. 2 is a side view of the hot-pressing apparatus shown in FIG. 1;
FIG. 3 is a front view of a partial structure where the second hot-pressing mechanism in the hot-pressing apparatus shown in FIG. 1 is located;
FIG. 4 is a top view of the partial structure shown in FIG. 3;
FIG. 5 is a side view of the partial structure shown in FIG. 3, with the jacking mechanism omitted;
FIG. 6 is a front view of the partial structure shown in FIG. 3, with the diaphragm clamping mechanism omitted;
FIG. 7 is an isometric view of the partial structure shown in FIG. 6;
FIG. 8 is a simplified schematic diagram of the hot-pressing apparatus shown in FIG. 1 performing a hot-pressing operation.

### DETAILED DESCRIPTION

In order to make the above objects, features and advantages of the present disclosure more clearly understood, specific embodiments of the present disclosure will be described in detail below with reference to the accompanying drawings. In a following description, numerous specific details are set forth in order to provide a thorough understanding of the present disclosure. However, the present disclosure can be implemented in many other ways different from those described here, and those skilled in the art can make similar improvements without violating a connotation of the present disclosure. Therefore, the present disclosure is not limited by the specific embodiments disclosed below.

In the description of the present disclosure, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for convenience of describing the present disclosure and simplifying the description, rather than indicating or implying that a device or element referred to must be provided with a particular orientation, be constructed and operate in a particular orientation, and therefore should not be understood as a limitation to the present disclosure.

In addition, terms "first" and "second" are only used for descriptive purposes and should not be understood as indicating or implying relative importance or implying a number of indicated technical features. Therefore, a feature delimited with "first", "second" may expressly or implicitly comprise at least one of those features. In a description of the present disclosure, "a plurality" means at least two, such as two, three, etc., unless expressly and specifically defined otherwise.

In the present disclosure, unless expressly specified and limited otherwise, terms "installed", "communicated", "connected", "fixed" and other terms should be interpreted in a broad sense, for example, it can be a fixed connection, a detachable connection, or integrated as one-piece; it can be a mechanical connection or an electrical connection; it can be directly connected, or indirectly connected through an intermediate medium, and it can be an internal communication between two elements or an interaction relationship between the two elements, unless otherwise explicitly defined. For those of ordinary skill in the art, specific meanings of the above terms in the present disclosure can be understood according to specific situations.

In the present disclosure, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is on a higher horizontal level than the second feature. The first feature being "below", "under" and "beneath" the second feature may mean that the first feature is directly below or obliquely below the second feature, or simply means that the first feature is on a lower horizontal level than the second feature.

It should be noted that when an element is referred to as being "fixed to" or "provided on" another element, it can be directly on another element, or there may be an intervening element therebetween. When an element is referred to as being "connected" to another element, it can be directly connected to another element or intervening elements may also be present. Terms "vertical", "horizontal", "upper", "lower", "left", "right" and similar expressions used here are only for illustration purposes rather than indicating the only implementation.

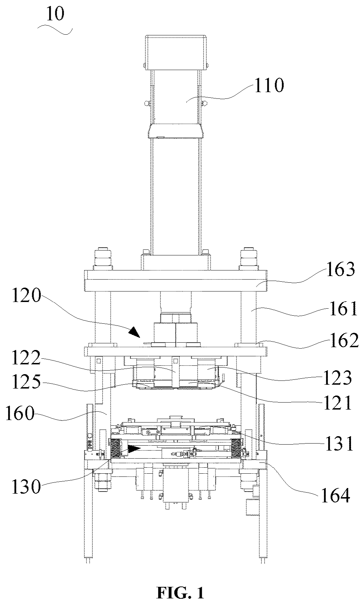

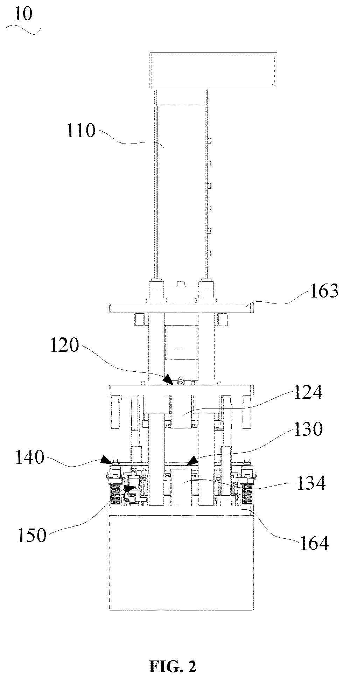

Please refer to FIGS. 1 and 2, a hot-pressing apparatus 100 in a preferred embodiment of the present disclosure comprises a hot-pressing drive mechanism 110, a first hot-pressing mechanism 120, a second hot-pressing mechanism 130, a diaphragm clamping mechanism 140, and a jacking mechanism 150.

The first hot-pressing mechanism 120 comprises a first hot-pressing plate 121, and the second hot-pressing mechanism 130 comprises a second hot-pressing plate 131. The first hot-pressing plate 121 and the second hot-pressing plate 131 are provided oppositely along the compressing direction (typically a vertical direction) and is capable of forming a laminating space therebetween for placing the battery cell (not shown in the figure). In the actual use, the second hot-pressing plate 131 is positioned below the first hot-pressing plate 121, and the battery cell to be compressed is placed on the bearing surface of the second hot-pressing plate 131. The hot-pressing drive mechanism 110 may be implemented using structures such as a cylinder, motor threaded screw pair, etc. The hot-pressing drive mechanism 110 is capable of driving the first hot-pressing plate 121 and the second hot-pressing plate 131 away from or close to each other along the compressing direction, so as to open the laminating space or compress the battery cell within the laminating space. Each of the first hot-pressing plate 121 and the second hot-pressing plate 131 is embedded with a heating rod, so as to heat the battery cell within the laminating space.

There may be provided one first hot-pressing mechanism 120 and one second hot-pressing mechanism 130, allowing one battery cell to be compressed per operation. In other application scenarios, there may be provided a plurality of the first hot-pressing mechanisms 120 and a plurality of the second hot-pressing mechanisms 130, wherein the plurality of first hot-pressing mechanisms 120 and the plurality of second hot-pressing mechanisms 130 are alternately laminated in the compressing direction, and the first hot-pressing plate 121 of each first hot-pressing mechanism 120 and the second hot-pressing plate 131 of an adjacent second hot-pressing mechanism 130 are provided oppositely to form the laminating space for placing the battery cell. Thus, the hot-pressing apparatus 100 may form a plurality of laminating spaces, and enable a plurality of battery cells to be placed therein simultaneously. Then, the hot-pressing drive mechanism 110 may bring the plurality of first hot-pressing plates 121 and their corresponding second hot-pressing plates 131 close to each other and thus compress the plurality of battery cells at once, thereby improving production efficiency.

For the sake of clarity, the present embodiment only describes the scenario where a single first hot-pressing mechanism 120 and a single second hot-pressing mechanism 130 are provided.

In addition, in the present embodiment, the hot-pressing apparatus 100 further comprises a rack 160, which is configured for supporting the hot-pressing drive mechanism 110, the first hot-pressing mechanism 120, and the second hot-pressing mechanism 130. The rack 160 is provided with a guiding rod 161 extending along the compressing direction (that is, the vertical direction shown in FIG. 1) and a guiding sleeve 162 slidably sleeved onto the guiding rod 161, the second hot-pressing mechanism 130 is fixedly installed on the rack 160, and the first hot-pressing mechanism 120 is provided on the guiding sleeve 162 and is in transmission connection with the hot-pressing drive mechanism 110.

When the hot-laminating operation is performed, the second hot-pressing plate 131 remains fixed while the hot-pressing drive mechanism 110 drives the first hot-pressing mechanism 120 to slide downward along the guiding rod 161, thereby causing the first hot-pressing plate 121 to move toward the second hot-pressing plate 131. Moreover, the guiding sleeve 162 cooperates with the guiding rod 161 to precisely guide the movement direction of the first hot-pressing plate 121, ensuring the laminating accuracy.

Specifically, the rack 160 comprises a top plate 163 and a bottom plate 164 provided oppositely along the compressing direction, and two ends of the guiding rod 161 are connected to the top plate 163 and the bottom plate 164 respectively. The hot-pressing drive mechanism 110 is installed on the top plate 163, while the second hot-pressing mechanism 130 is installed on the bottom plate 164.

In the present embodiment, the first hot-pressing mechanism 120 further comprises a short-circuit detection assembly 123. When the first hot-pressing plate 121 moves toward the second hot-pressing plate 131 and clamps the battery cell, the contacts of the short-circuit detection assembly 123 are just in contact with the positive and negative electrodes of the battery cell, thereby facilitating short-circuit detection.

In the present embodiment, the first hot-pressing mechanism 120 further comprises a first restraining block 124, which may move synchronously with the first hot-pressing plate 121; the second hot-pressing mechanism 130 further comprises a second restraining block 134, which is fixedly provided with respect to the second hot-pressing plate 131. Wherein, the first restraining block 124 has a first position and a second position. When the first restraining block 124 is in the first position, in a process of the first hot-pressing plate 121 moving toward the second hot-pressing plate 131, the first restraining block 124 is capable of abutting against the second restraining block 134 before the first hot-pressing plate 121 abuts against the second hot-pressing plate 131; when the first restraining block 124 is in the second position, it is capable of giving way to the second restraining block 134. When it is necessary to overhaul the device, the first restraining block 124 is moved to the first position. At this time, the second restraining block 134 may abut against the first restraining block 124 so as to prevent the first hot-pressing plate 121 from continuing to press down, thus preventing injury to personnel. When the hot-pressing operation is performed normally, the second restraining block 134 is moved to the second position.

In addition, the first hot-pressing mechanism 120 further comprises a blowing assembly 125, which is capable of blowing air to the battery cell in the laminating space, thereby cooling the battery cell and blowing away the dust.

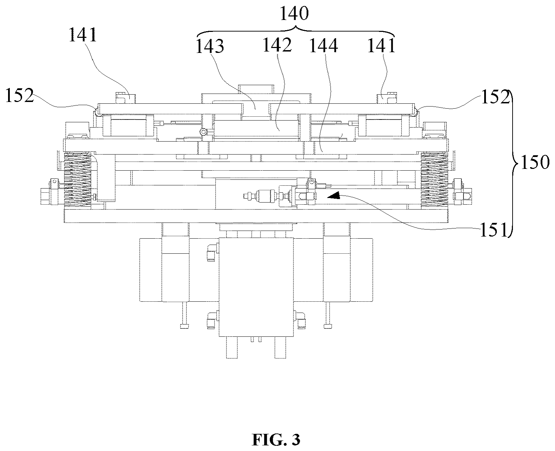

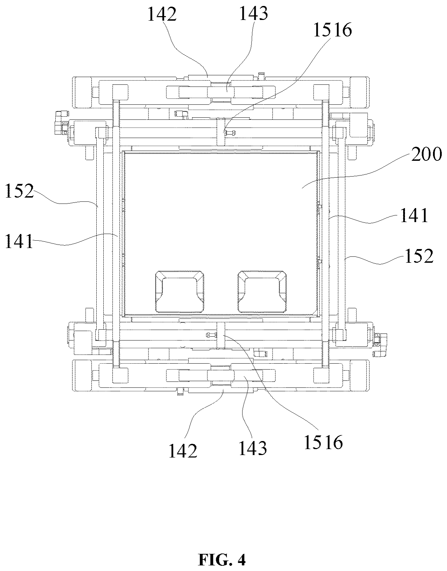

Please refer to FIGS. 3 and 4, the diaphragm clamping mechanism 140 is capable of providing a diaphragm 200 between the first hot-pressing plate 121 and the second hot-pressing plate 131. Moreover, the diaphragm 200 may move to conform to the bearing surface of the second hot-pressing plate 131.

In an initial state of the diaphragm clamping mechanism 140, the tensioned diaphragm 200 is located above the bearing surface of the second hot-pressing plate 131 and is roughly parallel to the bearing surface. In a process of transferring the battery cell to be compressed onto the second hot-pressing plate 131, the diaphragm 200 may support and transfer the battery cell. Specifically, the battery cell is first conveyed to the diaphragm 200, and when the diaphragm 200 moves to conform to the bearing surface of the second hot-pressing plate 131, the battery cell borne on the diaphragm 200 may be transferred onto the second hot-pressing plate 131.

The diaphragm 200 may be an elastic diaphragm with some extensibility, however, in order to steadily supporting the battery cell, the diaphragm 200 is preferably made of a material with lower extensibility. Wherein, the diaphragm clamping mechanism 140 may drive the clamped diaphragm 200 to move along the compressing direction via its own power element, so that the diaphragm 200 may move to conform to the bearing surface of the second hot-pressing plate 131 or move away from the bearing surface of the second hot-pressing plate 131. In addition, the diaphragm clamping mechanism 140 may be moved as a whole along the compressing direction by external force, thereby achieving the purpose of moving the diaphragm 200 relative to the second hot-pressing plate 131. Alternatively, the diaphragm clamping mechanism 140 may remain stationary, and may release or tighten the clamped diaphragm 200. By releasing or tightening the clamped diaphragm 200 and being in conjunction with external force, the diaphragm 200 may be made to move closer to or farther from the second hot-pressing plate 131.

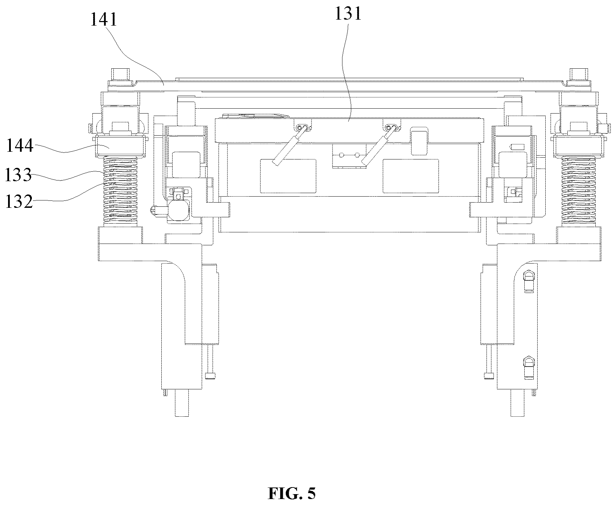

Please also refer to FIG. 5, in the present embodiment, the diaphragm clamping mechanism 140 comprises clamping plates 141 distributed on opposing edges of the second hot-pressing plate 131, as well as a tensioning element 142, wherein two ends of the diaphragm 200 are clamped respectively by the clamping plates 141 on two sides and are tensioned by the tensioning element 142.

Specifically, the tensioning element 142 may be a tensioning cylinder, spring, etc. The tensioning element 142 may be connected to the clamping plates 141 on the two sides, and may provide tensioning force to the clamping plates 141 to tension the diaphragm 200. Moreover, the tensioning force of the tensioning element 142 may be adjusted in real time by a proportional valve, so as to facilitate maintaining the diaphragm 200 in the tensioned state at all times. The diaphragm 200 in the tensioned state may improve the stability of the battery cell when it carries the battery cell. The clamping plates 141 may clamp and smooth out the diaphragm 200, effectively preventing the diaphragm 200 from wrinkling. Furthermore, since the diaphragm 200 is a vulnerable part, it requires frequent replacement. By clamping and fixing the diaphragm 200 with the clamping plates 141, both assembly and disassembly are made convenient, and thus facilitates replacing.

Specifically, the diaphragm clamping mechanism 140 further comprises a supporting plate 144 extending from the clamping plate 141 on one side to the clamping plate 141 on the other side, and the clamping plates 141 on the two sides are slidably installed on the supporting plate 144 through guide rails and sliders. The tensioning element 142 is also installed on the supporting plate 144 and is in transmission connection with the clamping plate 141. To support the clamping plates 141 more steadily, the clamping plate 141 is provided with the supporting plates 144 at both ends, and each supporting plate 144 is provided with a tensioning element 142.

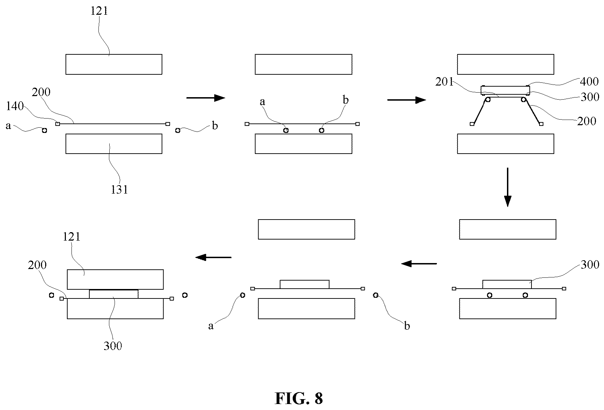

Please refer again to FIGS. 3 and 4, the jacking mechanism 150 comprises a driving assembly 151 and a supporting assembly 152. Wherein, the supporting assembly 152 may move to between the diaphragm 200 and the second hot-pressing plate 131 under the drive of the driving assembly 151, and jack the diaphragm 200 toward the first hot-pressing plate 121. The part of the diaphragm 200 that is jacked up by the supporting assembly 152 forms a transferring-supporting surface 201 for bearing the battery cell (see FIG. 8).

In the initial state of the jacking mechanism 150, the supporting assembly 152 is generally located outside the second hot-pressing plate 131. When it is necessary to place the battery cell onto the diaphragm 200 for transferring, the driving assembly 151 first drives the supporting assembly 152 to move to between the diaphragm 200 and the second hot-pressing plate 131, and then drives the supporting assembly 152 to move toward the first hot-pressing plate 121 along the compressing direction to jack up a part of the diaphragm 200. The transferring-supporting surface 201 formed by the supporting assembly 152 jacking up the diaphragm 200 protrudes upward relative to the bearing surface of the second hot-pressing plate 131, and the area of the transferring-supporting surface 201 is generally smaller than that of the bearing surface of the second hot-pressing plate 131.

The battery cell to be compressed is placed on the transferring-supporting surface 201 by the jaw, such that the part of the battery cell in contact with the jaw is not in contact with the transferring-supporting surface 201. That is, when placing the battery cell on the transferring-supporting surface 201, the jaw may be suspended without coming into contact with the diaphragm 200 and the supporting assembly 152. When the jaw is released, it will be withdrawn without influence on the transferring-supporting surface 201 and will not cause the battery cell to shake.

After the battery cell is placed on the transferring-supporting surface 201, the driving assembly 151 drives the supporting assembly 152 to withdraw. In a process of withdrawing the supporting assembly 152, the diaphragm 200 gradually flattens, allowing the battery cell to be borne steadily on the diaphragm 200. As the diaphragm 200 moves to conform to the bearing surface of the second hot-pressing plate 131, the battery cell borne on the diaphragm 200 is also transferred onto the second hot-pressing plate 131. It may be seen that in a process of transferring the battery cell onto the second hot-pressing plate 131, it is possible to prevent shaking or tilting of the battery cell by transferring the battery cell by means of the diaphragm 200, thus placing the battery cell steadily.

In the present embodiment, in a process of the hot-pressing drive mechanism 110 driving the first hot-pressing plate 121 and the second hot-pressing plate 131 close to each other, the first hot-pressing mechanism 120 may drive the diaphragm 200 to move until it conforms to the bearing surface of the second hot-pressing plate 131. In this way, the pressing force of the hot-pressing drive mechanism 110 may drive the diaphragm 200 to move relative to the second hot-pressing plate 131, thus eliminating the need for an additional power element specifically for the diaphragm 200, which helps to simplify the structure.

Please refer to FIGS. 3-5 again, in the present embodiment, the diaphragm clamping mechanism 140 is slidably provided along a compressing direction, the first hot-pressing mechanism 120 further comprises a down-pressing element 122, and in a process of the hot-pressing drive mechanism 110 driving the first hot-pressing plate 121 and the second hot-pressing plate 131 close to each other, the down-pressing element 122 is capable of pressing against the diaphragm clamping mechanism 140 and driving it to move along the compressing direction until it brings the diaphragm 200 to conform to the bearing surface of the second hot-pressing plate 131.

Specifically, the diaphragm clamping mechanism 140 may be slidably provided on a base or bottom plate 164 of the second hot-pressing mechanism 130. The supporting plate 144 of the diaphragm clamping mechanism 140 is provided with an abutting block 143 capable of abutting against and matching with the down-pressing element 122. When the hot-pressing drive mechanism 110 drives the first hot-pressing plate 121 to move toward the second hot-pressing plate 131, the down-pressing element 122 may move along with the first hot-pressing plate 121 and abut against the abutting block 143, thereby forcing the entire diaphragm clamping mechanism 140 to move downwards. As the first hot-pressing plate 121 continues to press down so that the diaphragm 200 eventually conforms to the bearing surface of the second hot-pressing plate 131, the first hot-pressing plate 121 presses the battery cell and the diaphragm 200 against the second hot-pressing plate 131. Since the first hot-pressing mechanism 120 drives the diaphragm clamping mechanism 140 to move as a whole in a process of down-pressing so as to bring the diaphragm 200 to move relative to the second hot-pressing plate 131, there is minimal pulling on the diaphragm 200, which may slow down the wear of the diaphragm 200 and thus reduce the frequency of replacing the diaphragm 200.

Furthermore, in the present embodiment, the second hot-pressing mechanism 130 further comprises a guide pillar 132 and an elastic element 133, the guide pillar 132 extends in the compressing direction, the diaphragm clamping mechanism 140 is sleeved onto the guide pillar 132, the diaphragm clamping mechanism 140 under support of the elastic element 133 enables the diaphragm 200 to be arranged spaced from the bearing surface of the second hot-pressing plate 131, and in a process of the hot-pressing drive mechanism 110 driving the first hot-pressing plate 121 and the second hot-pressing plate 131 close to each other, the down-pressing element 122 is capable of overcoming elastic force of the elastic element 133 and driving the diaphragm clamping mechanism 140 to move along the compressing direction.

Specifically, the guide pillar 132 may be fixedly installed on the base or bottom plate 164 of the second hot-pressing mechanism 130, and the elastic element 133 may be a compression spring sleeved onto the guide pillar 132. Specifically, the supporting plate 144 of the diaphragm clamping mechanism 140 is opened with an installation hole through which it is sleeved onto the guide pillar 132. The supporting plate 144 presses the compression spring sleeved onto the guide pillar 132, and the end of the guide pillar 132 is secured with a nut to prevent the supporting plate 144 from slipping off the guide pillar 132.

In a process of the down-pressing element 122 driving the diaphragm clamping mechanism 140 via the supporting plate 144 to move as a whole along the compressing direction, the pre-tension force generated by the elastic element 133 keeps the down-pressing element 122 to be abutted against the abutting block 143 reliably, thereby preventing the diaphragm clamping mechanism 140 from shaking. Additionally, when the down-pressing element 122 comes into contact with the abutting block 143, the elastic element 133 may provide cushioning. After the battery cell has been hot-pressed and the first hot-pressing mechanism 120 has been withdrawn, the diaphragm clamping mechanism 140 may also be automatically reset under the action of the elastic element 133 so that the diaphragm 200 automatically enters a preparation state of transferring the next battery cell.

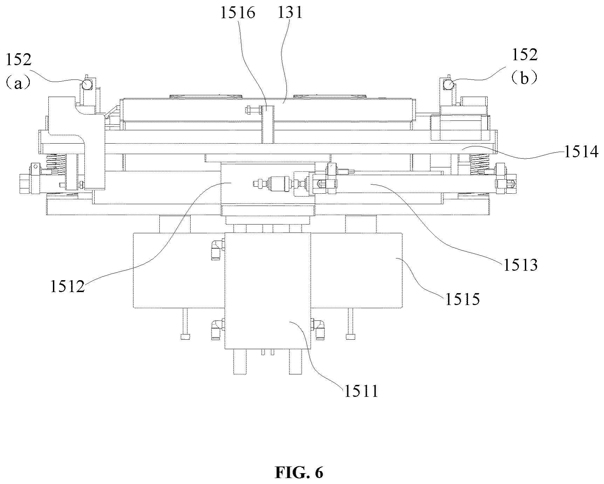

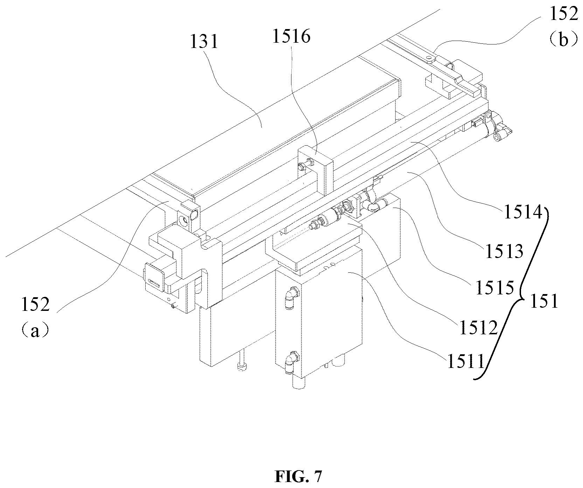

Please also refer to FIGS. 6 and 7, in the present embodiment, the supporting assembly 152 comprises at least two elongated jacking elements, which are arranged parallel to and spaced apart from each other.

The elongated jacking elements may move in a narrow space, thereby reducing the space occupied by the supporting assembly 152. Furthermore, when at least two jacking elements jointly jack up the diaphragm 200, they can form a flat transferring-supporting surface 201 on the jacking elements, making it possible to more steadily support the battery cell.

The jacking element may be configured as a rod-like structure with a square, circular, hexagonal, or other shape in cross section. Specifically, in the present embodiment, the jacking element is provided as a jacking roller. The surface of the jacking roller is smooth, which may reduce the friction between it and the diaphragm 200 and thus slow down the wear rate of the diaphragm 200.

Additionally, each roller may be designed to rotate about its own axis, and each rotational axis is parallel to the bearing surface of the second hot-pressing plate 131. In this way, in the jacking and withdrawing processes of the jacking elements, the jacking element may roll along the surface of the diaphragm 200 and further reduce the friction between it and the diaphragm 200, which in turn may further reduce the wear rate of the diaphragm 200.

Furthermore, in the present embodiment, the jacking elements comprise a first jacking element a and a second jacking element b. The driving assembly 151 is capable of driving the first jacking element a and the second jacking element b close to or away from each other so that the first jacking element a and the second jacking element b are capable of entering into or exiting from between the diaphragm 200 and the second hot-pressing plate 131, and the driving assembly 151 is further capable of driving the first jacking element a and the second jacking element b to ascend and descend synchronously along the compression direction so as to jack up or flatten the diaphragm 200.

In the initial state of the jacking mechanism 150, the first jacking element a and the second jacking element b are both located outside the bearing surface of the second hot-pressing plate 131 and are respectively located on two opposite sides of the second hot-pressing plate 131. When the diaphragm 200 needs to transfer the battery cell, the first jacking element a and the second jacking element b may be driven by the driving assembly 151 to move from the two sides of the second hot-pressing plate 131 into between the diaphragm 200 and the second hot-pressing plate 131, and approach each other to the required distance.

Next, when the first jacking element a and the second jacking element b jack up the diaphragm 200, the portion of the diaphragm 200 that is tensioned between the first jacking element a and the second jacking element b will form the transferring-supporting surface 201. Furthermore, by controlling the distance between the first jacking element a and the second jacking element b, it is possible to adjust the area size of the transferring-supporting surface 201, making it convenient to transfer different types of battery cells.

It should be noted that in other embodiments, the supporting assembly 152 may take other forms as long as it is capable of moving under the diaphragm 200 and jacking the diaphragm 200 to form the transferring-supporting surface 201 capable of supporting the battery cell. For example, the supporting assembly 152 may be a ring that can be driven by the driving assembly 151 to move in the direction of the diaphragm 200 and jack up the diaphragm 200 to form the circular transferring-supporting surface 201.

Refer to FIGS. 1 to 8 below, an operation of the above-described hot-pressing apparatus 100 to perform the compressing operation on the battery cell 300 will be briefly described:

Before placing the battery cell 300 to be compressed on the second hot-pressing plate 131, the first jacking element a and the second jacking element b are driven by the driving assembly 151 to move closer to each other, and move to between the diaphragm 200 and the second hot-pressing plate 131; the first jacking element a and the second jacking element b are then jacked up synchronously under drive of the driving assembly 151 and jack up a part of the diaphragm 200, thus forming the transferring-supporting surface 201; next, the jaw 400 places the clamped battery cell 300 on the transferring-supporting surface 201, and does not come into contact with the transferring-supporting surface 201; the first jacking element a and the second jacking element descend synchronously under drive of the driving assembly 151 so as to gradually flatten the diaphragm 200, and the battery cell 300 will be steadily borne on the surface of the diaphragm 200; the first jacking element a and the second jacking element b are driven by the driving assembly 151 to move away from each other and withdraw from between the diaphragm 200 and the second hot-pressing plate 131; finally, the hot-pressing drive mechanism 110 drives the first hot-pressing plate 121 to move toward the second hot-pressing plate 131, and drives the diaphragm 200 to come into contact with the bearing surface of the second hot-pressing plate 131, thus transferring the battery cell 300 to the bearing surface of the second hot-pressing plate 131; the hot-pressing drive mechanism 110 continues to apply pressure, thereby compressing the battery cell 300 between the first hot-pressing plate 121 and the second hot-pressing plate 131.

Refer to FIGS. 6 and 7 again, in the present embodiment, the driving assembly 151 comprises an elevation drive element 1511, an elevation plate 1512, a translation drive element 1513, and an installation plate 1514. Wherein, the elevation plate 1512 is installed on a driving end of the elevation drive element 1511 and is capable of ascending and descending along the compressing direction under drive of the elevation drive element 1511, the translation drive element 1513 and the installation plate 1514 are both installed on the elevation plate 1512, the first jacking element a and the second jacking element b are installed on the installation plate 1514 so as to be slidable along the first direction, and the translation drive element 1513 is capable of driving the first jacking element a and the second jacking element b close to or away from each other along the installation plate 1514.

The elevation drive element 1511 is fixedly installed relative to the second hot-pressing plate 131. Specifically, the elevation drive element 1511 may be fixed onto the base or bottom plate 164 of the second hot-pressing plate 131 via a fixing plate 1515. The installation plate 1514 is elongated, and both the first jacking element a and the second jacking element b may be installed on the installation plate 1514 through guide rails and sliders. When the elevation drive element 1511 drives the installation plate 1514 to ascend and descend, it may bring the first jacking element a and the second jacking element b on the installation plate 1514 to ascend and descend synchronously.

To improve the stability of the first jacking element a and the second jacking element b, there are provided two driving assemblies 151, and the two driving assemblies 151 are located on opposite sides of the second hot-pressing plate 131. Specifically, the two ends of the first jacking element a are respectively installed on the installation plates 1514 of the two driving assemblies 151, and the two ends of the second jacking element b are also respectively installed on the installation plates 1514 of the two driving assemblies 151. The two driving assemblies 151 may jointly drive the first jacking element a and the second jacking element b to translate as well as ascend and descend, enhancing stability while increasing the driving force.

Specifically, each driving assembly 151 comprises two translation drive elements 1513, and the two translation drive elements 1513 on the same driving assembly 151 are in transmission with the first jacking element a and the second jacking element b respectively. In this way, when the first jacking element a and the second jacking element b move close to or away from each other, they are driven by the two translation drive elements 1513.

In addition, in the present embodiment, the installation plate 1514 is provided with a restraining plate 1516, and the translation drive element 1513 is capable of driving the first jacking element a and the second jacking element b close to each other along the installation plate 1514 until they abut against the restraining plate 1516. The restraining plate 1516 is used for controlling the spacing between the first jacking element a and the second jacking element b, to prevent the spacing between them from becoming too small.

For the case where two driving assemblies 151 are provided, the restraining plate 1516 provided on one installation plate 1514 is used for restraining the first jacking element a, while the restraining plate 1516 provided on the other installation plate 1514 is used for restraining the second jacking element b.

The above hot-pressing apparatus 100, before transferring the battery cell 300, may first drive the supporting assembly 152 to jack up a part of the diaphragm 200, thus forming the transferring-supporting surface 201 above the second hot-pressing plate 131. The jaw 400 first places the battery cell 300 on the transferring-supporting surface 201, the transferring-supporting surface 201 may contact only a part of the battery cell 300 to allow the jaw 400 to be suspended, and once the jaw 400 releases, it can be withdrawn. Next, the jacking mechanism 150 withdraws to flatten the diaphragm 200, and the battery cell 300 will be borne on the diaphragm 200 steadily. As the hot-pressing drive mechanism 110 drives the first hot-pressing plate 121 and the second hot-pressing plate 131 close to each other, the first hot-pressing plate 121 may press the diaphragm 200 and the battery cell 300 borne on the diaphragm 200 against the second hot-pressing plate 131. It is clear that in a process of transferring the battery cell 300 to the second hot-pressing plate 131, the use of the diaphragm 200 for transferring may prevent the battery cell 300 from shaking or tilting, thus placing the battery cell 300 steadily.

The technical features of the above embodiments can be combined arbitrarily. For the sake of brevity, not all possible combinations of the individual technical features of the above embodiments are described. However, a combination of these technical features shall be considered to be within the scope of the present specification, as long as there is no contradiction in the combination.

The above embodiments are merely expressions of a few implementations of the present disclosure described in a specific and detailed manner, and are not to be construed as limitation to the scope of the present disclosure. It is to be noted that for a person of ordinary skill in the art, various modifications and improvements could be made without departing from the principle of the present disclosure, and shall fall into the protection scope of the present disclosure. Therefore, the protection scope of the present disclosure shall be subject to the appended claims.

## Claims

1. A hot-pressing apparatus, comprising a hot-pressing drive mechanism, a first hot-pressing mechanism and a second hot-pressing mechanism, the first hot-pressing mechanism comprising a first hot-pressing plate, the second hot-pressing mechanism comprising a second hot-pressing plate, **characterized in that** the hot-pressing apparatus further comprises:
a diaphragm clamping mechanism capable of providing a diaphragm between the first hot-pressing plate and the second hot-pressing plate; and
a jacking mechanism comprising a driving assembly and a supporting assembly, wherein the supporting assembly is capable of moving to between the diaphragm and the second hot-pressing plate under drive of the driving assembly and jacking the diaphragm toward the first hot-pressing plate, with a part of the diaphragm jacked by the supporting assembly forming a transferring-supporting surface for bearing a battery cell.

2. The hot-pressing apparatus according to claim 1, **characterized in that** each of the first hot-pressing plate and the second hot-pressing plate is embedded with a heating rod therein.

3. The hot-pressing apparatus according to claim 1, **characterized in that** there are provided a plurality of the first hot-pressing mechanisms and a plurality of the second hot-pressing mechanisms, wherein the plurality of first hot-pressing mechanisms and the plurality of second hot-pressing mechanisms are alternately laminated in a compressing direction, and the first hot-pressing plate of each first hot-pressing mechanism and the second hot-pressing plate of an adjacent second hot-pressing mechanism are provided oppositely to form a laminating space for placing the battery cell.

4. The hot-pressing apparatus according to claim 3, **characterized in that** the first hot-pressing mechanism further comprises a blowing assembly, which is capable of blowing air to the battery cell in the laminating space.

5. The hot-pressing apparatus according to claim 1, **characterized in that** the diaphragm clamping mechanism is capable of providing a tensioning force for the diaphragm to tension the diaphragm, and in a process of the driving assembly driving the supporting assembly to retract, the diaphragm gradually flattens under the tensioning force of the diaphragm clamping mechanism.

6. The hot-pressing apparatus according to claim 5, **characterized in that** the diaphragm clamping mechanism comprises a tensioning element and clamping plates distributed on opposing edges of the second hot-pressing plate, and two ends of the diaphragm are clamped respectively by the clamping plates on two sides and are tensioned by the tensioning element.

7. The hot-pressing apparatus according to claim 6, **characterized in that** the diaphragm clamping mechanism further comprises a supporting plate extending from the clamping plate on one side to the clamping plate on the other side, and the clamping plates on the two sides are slidably mounted on the supporting plate.

8. The hot-pressing apparatus according to claim 1, **characterized in that** in a process of the hot-pressing drive mechanism driving the first hot-pressing plate and the second hot-pressing plate close to each other, the first hot-pressing mechanism is capable of driving the diaphragm to move until it conforms to a bearing surface of the second hot-pressing plate.

9. The hot-pressing apparatus according to claim 1, **characterized in that** the diaphragm clamping mechanism is capable of releasing or tightening the diaphragm which has been clamped, and in a process of the hot-pressing drive mechanism driving the first hot-pressing plate and the second hot-pressing plate close to each other, the first hot-pressing mechanism forces the diaphragm clamping mechanism to release the diaphragm until the diaphragm is driven to move to conform to a bearing surface of the second hot-pressing plate.

10. The hot-pressing apparatus according to claim 1, **characterized in that** the diaphragm clamping mechanism is slidably provided along a compressing direction, the first hot-pressing mechanism further comprises a down-pressing element, and in a process of the hot-pressing drive mechanism driving the first hot-pressing plate and the second hot-pressing plate close to each other, the down-pressing element is capable of pressing against the diaphragm clamping mechanism and driving it to move along the compressing direction until it brings the diaphragm to conform to the bearing surface of the second hot-pressing plate.

11. The hot-pressing apparatus according to claim 10, **characterized in that** the second hot-pressing mechanism further comprises a guide pillar and an elastic element, the guide pillar extends in the compressing direction, the diaphragm clamping mechanism is sleeved onto the guide pillar, the diaphragm clamping mechanism under support of the elastic element enables the diaphragm to be arranged spaced from the bearing surface of the second hot-pressing plate, and in a process of the hot-pressing drive mechanism driving the first hot-pressing plate and the second hot-pressing plate close to each other, the down-pressing element is capable of overcoming elastic force of the elastic element and driving the diaphragm clamping mechanism to move along the compressing direction.

12. The hot-pressing apparatus according to claim 1, **characterized in that** the supporting assembly comprises at least two elongated jacking elements, which are arranged parallel to and spaced apart from each other.

13. The hot-pressing apparatus according to claim 12, **characterized in that** the jacking elements are configured as jacking rollers.

14. The hot-pressing apparatus according to claim 12, **characterized in that** the jacking elements comprise a first jacking element and a second jacking element, the driving assembly is capable of driving the first jacking element and the second jacking element close to or away from each other so that the first jacking element and the second jacking element are capable of entering into or exiting from between the diaphragm and the second hot-pressing plate, and the driving assembly is further capable of driving the first jacking element and the second jacking element to ascend and descend synchronously along the compression direction so as to lift or flatten the diaphragm.

15. The hot-pressing apparatus according to claim 14, **characterized in that** the driving assembly comprises an elevation drive element, an elevation plate, a translation drive element, and an installation plate, the elevation plate is installed on a driving end of the elevation drive element and is capable of ascending and descending along the compressing direction under drive of the elevation drive element, the translation drive element and the installation plate are both installed on the elevation plate, the first jacking element and the second jacking element are slidably installed on the installation plate, and the translation drive element is capable of driving the first jacking element and the second jacking element close to or away from each other along the installation plate.

16. The hot-pressing apparatus according to claim 15, **characterized in that** the installation plate is provided with a restraining plate, and the translation drive element is capable of driving the first jacking element and the second jacking element close to each other along the installation plate until they abut against the restraining plate.

17. The hot-pressing apparatus according to claim 15, **characterized in that** there are provided two driving assemblies, the two driving assemblies are located on two sides of an extending direction of the first jacking element and the second jacking element, and each driving assembly comprises two translation drive elements which are in transmission connection with the first jacking element and the second jacking element respectively.

18. The hot-pressing apparatus according to claim 1, **characterized in that** the first hot-pressing mechanism further comprises a short circuit detection assembly.

19. The hot-pressing apparatus according to claim 1, **characterized in that** the first hot-pressing mechanism further comprises a first restraining block, which is capable of moving synchronously with the first hot-pressing plate; the second hot-pressing mechanism further comprises a second restraining block which is provided fixedly relative to the second hot-pressing plate; the first restraining block has a first position and a second position, and when the first restraining block is in the first position, in a process of the first hot-pressing plate moving toward the second hot-pressing plate, the first restraining block is capable of abutting against the second restraining block before the first hot-pressing plate abuts against the second hot-pressing plate; when the first restraining block is in the second position, it is capable of giving way to the second restraining block.

20. The hot-pressing apparatus according to any one of claims 1 to 19, **characterized by** further comprising a rack which is provided with a guiding rod extending along a compressing direction and a guiding sleeve slidably sleeved onto the guiding rod, the second hot-pressing mechanism is fixedly installed on the rack, and the first hot-pressing mechanism is provided on the guiding sleeve and is in transmission connection with the hot-pressing drive mechanism.
